# EUROPÄISCHE PATENTANMELDUNG

(11) **EP 4 643 725 A1**
(43) Veröffentlichungstag der Anmeldung: **05.11.2025**
(21) Anmeldenummer: 24173960.6
(22) Anmeldetag: 02.05.2024
(51) Int. Cl.: A47J 36/06, A47J 43/07

(54) **DECKEL FÜR EIN ZUBEREITUNGSGEFÄSS EINES KÜCHENGERÄTS UND ZUBEREITUNGSGEFÄSS MIT DECKEL**

(71) Anmelder: Vorwerk & Co. Interholding GmbH, 42275 Wuppertal (DE)
(72) Erfinder: Thiele, Tobias, 42287 Wuppertal (DE); Langenberg, Stephan, 42287 Wuppertal (DE); Kraus, Roland, 40822 Mettmann (DE); Cornelissen, Markus, 53332 Bornheim (DE); Kraut-Reinkober, Stefan, 51375 Leverkusen (DE)
(74) Vertreter: Dr. Solf & Zapf Patent- und Rechtsanwalts PartG mbB

(57) **Zusammenfassung**

Die vorliegende Erfindung betrifft einen Deckel (1) für ein Zubereitungsgefäß (2) eines Küchengeräts (3), aufweisend einen Grundkörper (4) mit einer Deckeloberseite (1a), einer Deckelunterseite (1b) und mindestens einer Ausnehmung (5), wobei die Ausnehmung (5) den Grundkörper (4) zwischen Deckeloberseite (1a) und Deckelunterseite (1b) durchtritt.

Ein Deckel (1) für ein Zubereitungsgefäß (2), der während der Zubereitung das Austreten von Speisen zuverlässig verhindert und gleichzeitig einen Austritt von Dampf ermöglicht, wird dadurch realisiert, dass ein freier Querschnitt der Ausnehmung (5) zumindest teilweise von einem Spritzschutz (6) überdeckt ist, und dass der Spritzschutz (6) einstückig mit dem Grundkörper (4) ausgebildet ist.

## Beschreibung

Die Erfindung betrifft einen Deckel für ein Zubereitungsgefäß eines Küchengeräts.

Der Deckel weist einen Grundkörper mit einer Deckeloberseite, einer Deckelunterseite und mindestens einer Ausnehmung auf. Die Ausnehmung durchtritt den Grundkörper zwischen Deckeloberseite und Deckelunterseite. Ferner betrifft die Erfindung ein Zubereitungsgefäß für ein Küchengerät und ein Küchengerät mit einem Zubereitungsgefäß und einem Deckel.

Küchengeräte mit Küchengerätebasis und Zubereitungsgefäß sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Küchengerät weist üblicherweise eine Küchengerätebasis auf, die einen Aufnahmebereich für mindestens ein Zubereitungsgefäß bereitstellt. Die Speisen werden beispielsweise in einem Zubereitungsraum des Zubereitungsgefäßes aufgenommen.

Um ein Austreten von Speisen während der Zubereitung zu verhindern, ist der Zubereitungsraum mit dem Deckel abdeckbar bzw. verschließbar. Ein Zugeben von Speisen und Zutaten wird häufig durch eine mit einem Einsatz verschließbare Ausnehmung im Deckel ermöglicht.

Mit den aus dem Stand der Technik bekannten Deckeln ist es allerdings nicht möglich, einen Dampfaustritt aus dem Zubereitungsraum während einer Zubereitung zu gewährleisten, aber gleichzeitig einen Austritt von Speisen zu verhindern, da entweder die Öffnung mit dem Einsatz verschlossen ist oder der Einsatz entfernt ist.

Der Erfindung liegt daher die Aufgabe zugrunde, einen Deckel für ein Zubereitungsgefäß anzugeben, der während der Zubereitung das Austreten von Speisen zuverlässig verhindert und gleichzeitig einen Austritt von Dampf ermöglicht.

Die eingangs genannte Aufgabe ist bei einem gattungsgemäßen Deckel mit den Merkmalen des Kennzeichnungsteils des Anspruchs 1 gelöst, nämlich dadurch, dass ein freier Querschnitt der Ausnehmung zumindest teilweise von einem Spritzschutz überdeckt ist, und dass der Spritzschutz einstückig mit dem Grundkörper ausgebildet ist.

Der Deckel ist zum Verschließen oder Abdecken des Zubereitungsraums eines Zubereitungsgefäßes für ein Küchengerät vorgesehen. Der Deckel ist vorzugsweise mit dem Zubereitungsgefäß verriegelbar, insbesondere automatisch verriegelbar. Das Verriegeln erfolgt beispielsweise dadurch, dass ein Verriegelungselement relativ zum Deckel bewegt, beispielsweise rotiert, wird oder dadurch, dass der Deckel relativ zum Zubereitungsgefäß bewegt wird. Der Deckel ist insbesondere formschlüssig mit einem Zubereitungsgefäß verriegelbar. Vorzugsweise weist der Deckel zum Verriegeln mindestens einen auf der Deckelunterseite hervorstehenden Nocken auf, der zum Zusammenwirken mit einem Zubereitungsgefäß vorgesehen ist. Insbesondere sind mindestens oder genau vier Nocken an der Deckelunterseite ausgebildet. Zwischen dem Deckel und dem Zubereitungsgefäß, insbesondere einem oberen Rand des Zubereitungsgefäßes, ist beispielsweise mindestens eine Dichtung angeordnet. Vorzugsweise ist die Dichtung fest mit dem Deckel verbunden, z. B. form- und/oder kraftschlüssig am Deckel gehalten oder einstückig mit dem Deckel ausgebildet.

Der Deckel weist einen Grundkörper mit einer Deckeloberseite und einer Deckelunterseite auf. Die Deckelunterseite ist zum Auflegen auf das Zubereitungsgefäß vorgesehen und die Deckeloberseite stellt im aufgelegten Zustand die Außenseite dar. Der Deckel weist mindestens oder genau eine Ausnehmung auf, die den Grundkörper zwischen Deckeloberseite und Deckelunterseite durchtritt. Vorzugsweise ist die Ausnehmung zentral im Deckel angeordnet. Vorzugsweise ist die Ausnehmung kreisrund ausgebildet. Die Ausnehmung weist einen freien Querschnitt auf, der sich insbesondere parallel zu einer Mittelachse der Ausnehmung erstreckt. Vorzugsweise ist zumindest ein Teil der Deckeloberseite in einer gedachten Ebene angeordnet und die Mittelachse der Ausnehmung ist eine Ebenennormale dieser Ebene. Der freie Querschnitt ist vorzugsweise der Querschnitt in einer Richtung parallel zur Mittelachse.

Um vorteilhaft ein Austreten von Speisen aus einem Zubereitungsraum eines Zubereitungsgefäßes zu verhindern, wenn der Deckel auf ein Zubereitungsgefäß aufgebracht ist, ist ein Spritzschutz vorgesehen, der den freien Querschnitt der Ausnehmung zumindest teilweise überdeckt. Damit der Spritzschutz stets an seiner vorgesehenen Position bleibt, ist der Spritzschutz einstückig mit dem Grundkörper ausgebildet. Der Spritzschutz ist beispielsweise ein-, zwei- oder mehrteilig ausgebildet. Es ist beispielsweise vorgesehen, dass sich mehrere Teile des Spritzschutzes labyrinthartig überdecken, insbesondere um ein Austreten von Dampf zu ermöglichen und einen Austritt von Speisen oder Flüssigkeiten, insbesondere Spritzern von Speisen oder Flüssigkeiten, zu verhindern.

Der Spritzschutz ist beispielsweise zumindest teilweise oder vollständig oberhalb der Ausnehmung und/oder zumindest teilweise oder vollständig in der Ausnehmung und/oder zumindest teilweise oder vollständig unterhalb der Ausnehmung angeordnet. Es ist beispielsweise vorgesehen, dass der Spritzschutz einen Abstand zu der Deckeloberseite und/oder der Deckelunterseite, insbesondere einer Oberfläche der Deckeloberseite und/oder der Deckelunterseite aufweist. Es ist vorgesehen, dass der Spritzschutz oberhalb oder unterhalb der Deckeloberseite oder der Deckelunterseite beabstandet zur Ausnehmung bzw. zu einer Oberfläche der Deckeloberseite oder der Deckelunterseite angeordnet ist. Der Spritzschutz überdeckt den freien Querschnitt der Ausnehmung zumindest teilweise. Vorzugsweise überdeckt der Spritzschutz den freien Querschnitt der Ausnehmung zu mindestens 80 % oder zu mindestens 90 %.

Beispielsweise ist vorgesehen, dass der Spritzschutz gitter- oder netzartig ausgebildet ist. Es ist auch vorgesehen, dass der Spritzschutz vollständig geschlossen ausgebildet ist.

Der Deckel weist mindestens ein Griffstück auf, das sich in radialer Richtung, insbesondere in radialer Richtung zur Mittelachse der Ausnehmung, von dem Deckel weg erstreckt. Vorzugsweise weist das Griffstück mindestens zwei Griffstückabschnitte auf, die in einem Winkel im Bereich zwischen 10° und 45°, vorzugsweise von etwa 30°, zueinander angeordnet sind. Vorzugsweise ist der Deckel, insbesondere einstückig, aus einem Kunststoff hergestellt.

Zusätzlich zum zuverlässigen Verhindern des Austretens von Speisen während der Zubereitung im Zubereitungsraum des Zubereitungsgefäßes ist ein wichtiger Aspekt, dass durch den Spritzschutz insbesondere ein Durchgreifen der Ausnehmung durch einen Benutzer verhindert wird. Zudem hat der Spritzschutz die Wirkung, dass eine Geräuschemission aus dem Zubereitungsraum minimiert wird, während ein definierter Dampfaustritt möglich bleibt. Durch die einstückige Ausgestaltung wird eine gute Reinigbarkeit gewährleistet.

Gemäß einer ersten Ausgestaltung des Deckels ist vorgesehen, dass der freie Querschnitt der Ausnehmung vollständig von dem Spritzschutz überdeckt ist, und dass zwischen Spritzschutz und Grundkörper mindestens eine in Umfangsrichtung der Ausnehmung orientierte Durchtrittsöffnung vorhanden ist. Der Spritzschutz ist derart einstückig an den Grundkörper angebunden, dass der freie Querschnitt der Ausnehmung vollständig überdeckt ist, und dass für den Dampfaustritt eine in Umfangsrichtung orientierte Durchtrittsöffnung vorhanden ist. Beispielsweise wird die Durchtrittsöffnung dadurch ausgebildet, dass der Spritzschutz zum Grundkörper beabstandet angeordnet ist. Die Durchtrittsöffnung ist vorzugsweise schlitzartig ausgebildet, weist also insbesondere eine Erstreckung in eine Höhenrichtung auf, die wesentlich geringer als eine Erstreckung in eine Breitenrichtung ist. Vorzugsweise erstreckt sich die Durchtrittsöffnung über einen Teil des Umfangs der Ausnehmung. Vorzugsweise sind zwischen Spritzschutz und Grundkörper mindestens oder genau zwei, mindestens oder genau drei oder mindestens oder genau vier Durchtrittsöffnungen in Umfangsrichtung der Ausnehmung ausgebildet.

Die Durchtrittsöffnungen sind von austretendem Dampf nur in radialer Richtung der Ausnehmung durchströmbar, so dass Dampf ungehindert austreten kann. Ein Austreten von Speisen bzw. Spritzern wird durch den Spritzschutz verhindert, weil diese für ein vollständiges Austreten eine Richtungsänderung vollziehen müssten, die in einer Richtung beschleunigte Fluid- bzw. Speisepartikel nicht ohne Einwirkung vollziehen. Die die Ausnehmung umgebende Stauwand trägt vorteilhaft zur Dampflenkung bei, indem sie eine Umlenkung des Dampfes bewirkt und damit zu einem nahezu horizontal ausströmenden Dampf nach oben beträgt.

Gemäß einer weiteren Ausgestaltung des Deckels ist vorgesehen, dass der Spritzschutz mit mindestens oder genau einem Steg oder mindestens oder genau zwei oder mindestens oder genau drei Stegen mit dem Grundkörper verbunden ist. Eine derartige Ausgestaltung ist deshalb vorteilhaft, weil durch das Anbinden des Spritzschutzes mit Stegen automatisch in Umfangsrichtung orientierte Durchtrittsöffnungen für den Dampf ausgebildet werden. Die Durchtrittsöffnungen sind an den oder die Stege angrenzend ausgebildet. Die Anzahl der Stege bestimmt vorteilhaft die Anzahl an Durchtrittsöffnungen.

Als besonders vorteilhaft hat sich gemäß einer weiteren Ausgestaltung des Deckels herausgestellt, wenn vorgesehen ist, dass der Spritzschutz in Richtung der Deckeloberseite konvex gewölbt ist. Wenn der Spritzschutz an der Deckelunterseite unterhalb der Ausnehmung angeordnet ist, erstreckt sich die Wölbung des Spritzschutzes in Richtung der Ausnehmung. Es ist vorgesehen, dass nur ein Teil des Spritzschutzes in Richtung der Deckeloberseite gewölbt ist, oder dass der Spritzschutz vollständig in Richtung der Deckeloberseite gewölbt ist. Insbesondere ist vorgesehen, dass nur die Oberseite des Spitzschutzes, die in Richtung der Deckeloberseite orientiert ist, konvex gewölbt ist. Die konvexe Wölbung des Spritzschutzes in Richtung der Deckeloberseite weist den Vorteil auf, dass von der Deckeloberseite durch die Ausnehmung auf den Spritzschutz auftropfende Flüssigkeit entlang der konvexen Wölbung abläuft und dann durch eine in Umfangsrichtung angeordnete Durchtrittsöffnung in den Zubereitungsraum tropft. Das hat den Vorteil, dass sich keine Flüssigkeit auf der Oberseite des Spritzschutzes sammeln kann.

Besonders vorteilhaft ist vorgesehen, dass der Spritzschutz eine im Wesentlichen konstante Dicke aufweist. Insbesondere ist vorgesehen, dass eine Unterseite des Spritzschutzes, also eine Oberfläche des Spritzschutzes an der Deckelunterseite, konkav gewölbt ist. Bei einer konstanten Dicke des Spritzschutzes ist bei einer konvex gewölbten Oberseite automatisch die Unterseite konkav gewölbt. Die konkave Wölbung der Unterseite des Spritzschutzes hat ebenfalls den Vorteil, dass von unten gegen den Spritzschutz anspritzende Flüssigkeit oder Speisen entlang der gewölbten Oberfläche automatisch ablaufen und in Richtung des Zubereitungsraumes tropfen. Die konkave Wölbung des Spritzschutzes hat beispielsweise bei einem Durchmesser im Bereich zwischen 27,5 mm und 37,5 mm, insbesondere von ca. 32,5 mm, durch die Neigung einen Abfall im Bereich von 4 mm und 5,4 mm, insbesondere von ca. 4,7 mm, der sowohl ein kontinuierliches Ablaufen einer zum Emulgieren aufgebrachten Flüssigkeit als auch ein Wiederzurückfließen von Spritzern, die aus dem Zubereitungsraum in die Aufnahmeöffnung gelangen können, ermöglicht.

Des Weiteren ist gemäß einer bevorzugten Ausgestaltung vorgesehen, dass der Spritzschutz geneigt ist, so dass von der Deckeloberseite und/oder der Deckelunterseite aufgebrachte oder anspritzende Flüssigkeiten zumindest teilweise in Richtung der Neigung ablaufen. Vorzugsweise ist der Spritzschutz gegenüber einer Mittelachse der Ausnehmung geneigt. Beispielsweise ist der Spritzschutz in Richtung der Stauwandöffnung geneigt, insbesondere so, dass eine größere Durchtrittsöffnung unterhalb der Stauwandöffnung ausgebildet ist. Das weist den Vorteil auf, dass eine Flüssigkeit nur in Richtung der dort angeordneten Durchtrittsöffnung läuft und eine weitere Durchtrittsöffnung oder weitere Durchtrittsöffnungen für einen Eintritt von Luft oder den Austritt von Dampf frei bleiben.

Durch die Neigung weist die in Umfangsrichtung orientierte Durchtrittsöffnung bzw. weisen die in Umfangsrichtung orientierten Durchtrittsöffnungen entlang ihres Verlaufes beispielsweise unterschiedliche Höhen auf. Durch die Neigung ist vorzugsweise eine Durchtrittsöffnung auf der Neigungsseite größer als auf der gegenüberliegenden Seite der Ausnehmung, so dass eine Flüssigkeit der Neigung automatisch in Richtung einer größeren, insbesondere höheren, Durchtrittsöffnung abläuft. Eine derartig vergrößerte Durchtrittsöffnung kann zum einen das Ablaufen von Flüssigkeit und zum anderen den Austritt von Dampf zuverlässig gewährleisten.

Insbesondere um vorteilhaft eine Flüssigkeit, beispielsweise eine zähflüssige Flüssigkeit wie Öl, gezielt in dem Zubereitungsraum zu dosieren, ist gemäß einer weiteren Ausgestaltung des Deckels vorgesehen, dass die Ausnehmung auf der Deckeloberseite zumindest teilweise von mindestens einer Stauwand umgeben ist, dass zumindest ein Teil der Oberfläche der Deckeloberseite zumindest abfallend in Richtung der Stauwand geneigt ist, dass die Stauwand mindestens eine Stauwandöffnung aufweist, und dass mindestens ein tiefster Bereich der geneigten Oberfläche der Deckeloberseite zumindest angrenzend an die Stauwandöffnung ausgebildet ist. Die die Ausnehmung umgebende Oberfläche der Deckeloberseite ist vorzugsweise vollumfänglich in Richtung der Ausnehmung geneigt. Dabei ist vorgesehen, dass die Neigung über den Umfang überall gleich oder über bestimmte Umfangsbereiche unterschiedlich ist. Vorzugsweise variiert die Neigung der Oberfläche zwischen 4° und 15°, insbesondere zwischen 6,5° und 10,5°, insbesondere gegenüber einer Mittelachse der Ausnehmung. Dadurch wird gewährleistet, dass ein Benutzer eine Flüssigkeit irgendwo auf die geneigte Oberfläche dosieren kann und diese dann automatisch in Richtung der Ausnehmung, insbesondere bis zur Stauwand läuft. Je nach Neigung der Oberseite läuft eine Flüssigkeit dann an der Stauwand entlang bis zur Stauwandöffnung, durch die die Flüssigkeit dann in den Zubereitungsraum gelangen kann.

Vorzugsweise ist ein tiefster Bereich der geneigten Oberfläche zumindest angrenzend an die Stauwandöffnung ausgebildet. Eine auf die Deckeloberseite aufgebrachte Flüssigkeit würde also stets zu dem tiefsten Bereich der geneigten Oberfläche laufen, der zumindest an die Stauwandöffnung angrenzt. Dadurch läuft die Flüssigkeit automatisch zur Stauwandöffnung und tropft durch die Stauwandöffnung in den Zubereitungsraum. Vorzugsweise ist vorgesehen, dass die Stauwand vollumfänglich geschlossen ist und nur von der Stauwandöffnung durchtreten wird.

Die die Ausnehmung umgebende Fläche ist vorzugsweise derart ausgebildet, dass auf diese Fläche aufgebrachte Flüssigkeit - bei normaler Verwendung des Deckels auf einem Zubereitungsgefäß - stets in Richtung der Stauwandöffnung läuft.

Die Stauwand erstreckt sich vorzugsweise im Wesentlichen parallel zu einer Mittelachse der Ausnehmung. Als besonders vorteilhaft hat sich herausgestellt, wenn ein freier Durchflussquerschnitt der Stauwandöffnung im Bereich zwischen 15 mm² und 35 mm² liegt. Besonders bevorzugt ist ein Durchflussquerschnitt der Stauwandöffnung von etwa 25 mm², der insbesondere auf Basis üblicher zu emulgierender Flüssigkeiten, z. B. Pflanzenöl, bestimmt worden ist.

Die Größe der Stauwandöffnung ist vorzugsweise so gewählt, dass nur eine bestimmte Menge einer Flüssigkeit mit einer vorbestimmten Viskosität die Stauwandöffnung in einem definierten Zeitraum durchtreten kann. Dadurch kann eine Flüssigkeit gezielt in den Zubereitungsraum dosiert, insbesondere emulgiert, werden. Die Menge der Flüssigkeit kann vollständig auf den Deckel aufgegeben werden und das Dosieren in den Zubereitungsraum wird von der Stauwandöffnung definiert.

Bevorzugt ist gemäß einer weiteren Ausgestaltung vorgesehen, dass die Stauwand unmittelbar an die Ausnehmung angrenzend ausgebildet ist. Die Innenfläche der Ausnehmung bildet dann eine Verlängerung der Stauwand. Vorzugsweise ist zwischen Stauwand und der Oberfläche der Deckeloberseite ein Radius ausgebildet, insbesondere um das Ablaufen von Flüssigkeiten zu begünstigen. Es ist bevorzugt vorgesehen, dass die Stauwand über ihren gesamten Verlauf eine konstante Höhe aufweist. Eine Stirnfläche der Stauwand weist folglich einen konstanten Abstand zu der gedachten Ebene auf.

Um vorteilhaft zu verhindern, dass die Stauwand zum Abdecken der Ausnehmung verwendet wird, ist auch vorgesehen, dass die Stauwand eine von einer geraden Kontur abweichende Kontur aufweist, beispielsweise eine Wellen- oder Zackenkontur aufweist. Dadurch kann ein Verwender kein flaches Element auf die Stauwand auflegen, um die Ausnehmung vollständig zu verschließen.

Damit insbesondere eine durch die Stauwandöffnung durchtretende Flüssigkeit nicht unmittelbar auf den Spritzschutz tropft, ist gemäß einer weiteren Ausgestaltung des Deckels vorgesehen, dass unterhalb der Stauwandöffnung eine lokale Erweiterung der Ausnehmung und/oder mindestens eine Durchtrittsöffnung ausgebildet ist. Dadurch kann eine durch die Stauwandöffnung durchtretende Flüssigkeit unmittelbar in den darunterliegenden Zubereitungsraum eines Zubereitungsgefäßes tropfen. Beispielsweise weist die lokale Erweiterung einen im Wesentlichen rechteckigen Querschnitt auf.

Eine weitere Ausgestaltung des Deckels sieht vor, dass an der Deckeloberseite ein Deckelrand ausgebildet ist. Vorzugsweise erstreckt sich ein höchster Abschnitt des Deckelrandes in einer gedachten Ebene, die von einer Mittelachse der Ausnehmung als Ebenennormale durchtreten wird. Dadurch kann der Deckel mit seinem Deckelrand auf eine ebene Oberfläche gelegt werden, ohne dass der Deckel verkippen kann. Vorzugsweise bildet der an der Deckeloberseite ausgebildete Deckelrand an der Deckelunterseite einen umlaufenden Rücksprung aus, mit dem ein Zubereitungsgefäß im aufgebrachten Zustand des Deckels zumindest teilweise übergriffen werden kann.

Vorzugsweise umgibt der Deckelrand die geneigte Oberfläche an der Deckeloberseite vollständig. Der Deckelrand begrenzt vorteilhaft ein Volumen, das zumindest teilweise mit einer Flüssigkeit befüllt werden kann. Beispielweise wird das befüllbare Volumen von dem Deckelrand und der Stauwand begrenzt. Die Füllhöhe des Volumens wird insbesondere durch die Höhe der Stauwand definiert. Vorzugsweise ist vorgesehen, dass sich der Deckelrand höher erstreckt als ein höchster Bereich der geneigten Oberfläche. Insbesondere schließt sich der Deckelrand in radialer Richtung an den höchsten Bereich der geneigten Oberfläche an. Vorzugsweise schließt sich der Deckelrand mit einer im Wesentlichen senkrechten Kante an die in Richtung der Ausnehmung geneigte Oberfläche an der Deckeloberseite an.

Um ein Zusammenwirken mit einem Dampfgaraufsatz vorteilhaft zu verbessern, ist insbesondere vorgesehen, dass an dem Deckelrand, insbesondere an einer Oberseite des Deckelrandes, mindestens ein umlaufender Steg ausgebildet ist. Durch den Steg wird vorzugsweise eine Auflage, insbesondere ein Auflagering, für einen Dampfgaraufsatz bereitgestellt. Der Steg ist beispielsweise unmittelbar an die Kante des Deckelrandes anschließend ausgebildet oder weist in radialer Richtung einen Abstand zu der Kante auf.

Die Menge an Flüssigkeit, die ein Benutzer auf einmal zum Emulgieren auf den Deckel aufgeben kann, wird vorzugsweise durch die Höhe der Stauwand begrenzt. Durch die Stauwand bleibt der Bereich der Ausnehmung frei von der aufgebrachten Flüssigkeit und ermöglicht das Austreten von Luft bzw. Dampf während des Emulgier-Vorgangs.

Um vorteilhaft eine bestimmte Flüssigkeit auf die Deckeloberseite aufbringen zu können, ist gemäß einer Ausgestaltung vorgesehen, dass sich der Deckelrand höher als die Stauwand erstreckt. Vorzugsweise erstreckt sich der Deckelrand um mindestens 10 %, insbesondere um mindestens 20 %, höher als die Stauwand. Beispielsweise weist die Stauwand eine Höhe zwischen 3 mm und 12 mm auf. Vorzugsweise weist die Stauwand einen Abstand zwischen 10 mm und 12 mm von der gedachten Ebene auf. Die Stirnfläche der Stauwand weist insbesondere einen Abstand zwischen 8 mm und 14 mm von einer Oberkante des Deckelrandes auf. Wenn der Deckelrand in der Ebene liegt, weist die Stirnfläche der Stauwand einen Abstand zwischen 8 mm und 14 mm von der Ebene auf. Ausgehend von der höchsten Stelle der die Ausnehmung umgebenden, geneigten Fläche, weist der Deckelrand bevorzugt eine Höhe im Bereich zwischen 13,5 mm und 17,5 mm, insbesondere etwa 15,5 mm auf.

Eine weitere Ausgestaltung des Deckels sieht vor, dass die Ausnehmung auf der Deckelunterseite zumindest teilweise, insbesondere vollständig, von einer Trombenwand umgeben ist. Die Trombenwand erstreckt sich vorzugsweise im Wesentlichen parallel zu einer Mittelachse der Ausnehmung. Insbesondere ist vorgesehen, dass die Trombenwand zur Ausnehmung beabstandet angeordnet ist. Die Trombenwand weist ausgehend von einer Oberfläche an der Deckelunterseite beispielsweise eine Höhe zwischen 6 mm und 8,5 mm auf. Die Trombenwand weist vorzugsweise über ihren gesamten Umfang eine einheitliche Höhe auf, bzw. eine Stirnseite der Trombenwand weist einen einheitlichen Abstand zur gedachten Ebene auf. Die Trombenwand dient insbesondere dazu, die Durchtrittsöffnungen an der Ausnehmung in radialer Richtung abzudecken, so dass aus radialer Richtung keine Speisen bzw. Spritzer durch die Durchtrittsöffnungen bzw. die Durchtrittsöffnung hinausspritzen können. Der Durchmesser der Trombenwand ist beispielsweise doppelt so groß wie der Durchmesser der Ausnehmung.

Besonders vorteilhaft ist die Kombination von Spritzschutz, Stauwand und Trombenwand. Der Spritzschutz verhindert die direkten Spritzer, die von unten aus dem Zubereitungsgefäß kommen und beinahe vertikal auf den Deckel treffen, die Trombenwand und die Stauwand stoppen die Spritzer, die schräg aus der Ausnehmung heraustreten könnten.

Eine weitere Ausgestaltung des Deckels sieht vor, dass eine die Ausnehmung umgebende Oberfläche der Deckelunterseite, bei einer Betrachtung auf die Deckelunterseite, ausgehend von der Ausnehmung in Richtung einer Unterseite des Deckelrandes abfällt bzw. ausgehend von einer Unterseite des Deckelrandes in Richtung der Ausnehmung ansteigt. Der Grundkörper des Deckels weist vorzugsweise eine im Wesentlichen konstante Dicke auf, so dass die Neigung der die Ausnehmung umgebenden Oberfläche der Deckeloberseite in Richtung der Ausnehmung - bei einer Betrachtung im Schnitt - ebenfalls eine Neigung der die Ausnehmung auf der Deckelunterseite umgebenden Fläche in Richtung der Ausnehmung bedingt. Dadurch wird gewährleistet, dass im aufgebrachten Zustand des Deckels auf einem Zubereitungsgefäß anspritzende Flüssigkeit ebenfalls in Richtung der Ausnehmung abläuft. Bei vorhandener Trombenwand würde die Flüssigkeit bis zur Trombenwand laufen und dann entlang der Trombenwand senkrecht nach unten in den Zubereitungsraum tropfen.

Um ein Rotieren des Deckels im aufgebrachten Zustand, insbesondere bei einer automatischen Verriegelung mit einem Zubereitungsgefäß, zu verhindern, ist gemäß einer weiteren Ausgestaltung vorgesehen, dass der Deckel an der Deckelunterseite mindestens eine Verdrehsicherung in Form mindestens einer Ausnehmung aufweist, und dass die Verdrehsicherung derart ausgebildet ist, dass eine zumindest teilweise radial nach außen von einem Zubereitungsgefäß hervorstehende Erweiterung beim Aufbringen in die Verdrehsicherung eintreten kann. Beispielsweise erstreckt sich die Ausnehmung der Verdrehsicherung im Wesentlichen parallel zu der Mittelachse der Ausnehmung. Geht man davon aus, dass der Deckel im Wesentlichen in vertikaler Richtung auf das Zubereitungsgefäß aufgebracht wird, erstreckt sich die Ausnehmung im Wesentlichen parallel zur Aufbringrichtung, so dass eine zumindest teilweise radial, insbesondere senkrecht zur Mittelachse der Ausnehmung bzw. einer Rotationsachse eines Werkzeuges des Zubereitungsgefäßes hervorstehende Erweiterung beim Aufbringen in die Ausnehmung der Verdrehsicherung hineingleiten kann, um durch einen Zusammenwirken eine Rotation des Deckels zu verhindern.

Eine weitere Ausgestaltung des Deckels sieht vor, dass der Deckel an der Deckelunterseite eine Mehrzahl von Zentrierelementen aufweist. Die Zentrierelemente dienen vorteilhaft dazu, den Deckel auf dem Zubereitungsgefäß zu zentrieren, insbesondere um ein Abdichten durch eine Dichtung zu gewährleisten. Beispielsweise sind mindestens oder genau drei, mindestens oder genau vier oder mindestens oder genau fünf Zentrierelemente an dem Deckel angeordnet. Vorzugsweise sind die Zentrierelemente an einer Deckelunterseite angeordnet. Beispielsweise stehen die Zentrierelemente, insbesondere im Bereich des Rücksprungs von einem inneren Rand des Rücksprungs, in Richtung der Ausnehmung hervor. Die Zentrierelemente sind insbesondere von einer freien Kante des Randes weggewandt angeordnet. Jedes Zentrierelement erstreckt sich nur über einen Teil der Höhe des inneren Randes in dem Rücksprung. Die Zentrierelemente weisen z. B. eine Dicke auf, die etwa 10 % bis 50 % der Wandstärke des Deckels entspricht.

Vorzugsweise ist mindestens ein erstes Zentrierelement auf dem Umfang des Deckels gegenüberliegend zum Griffstück angeordnet. Beispielsweise sind ein zweites und ein drittes Zentrierelement in einem Polarkoordinatensystem, in dem die Mittelachse der Ausnehmung den Pol bildet und das Griffstück bei 0° angeordnet ist, bei Winkeln von etwa 90° und etwa 270° auf dem Umfang angeordnet. Das zweite und dritte Zentrierelement sind vorteilhaft gegenüberliegend zueinander angeordnet. Vorzugsweise ist mindestens ein viertes Zentrierelement auf dem Umfang im Bereich des Griffstückes angeordnet. Besonders bevorzugt sind ein viertes und ein fünftes Zentrierelement im Bereich des Griffstückes angeordnet, beispielsweise jeweils ein Zentrierelement auf einer Seite der Ausnehmung der Verdrehsicherung.

Vorteilhaft weist mindestens ein Zentrierelement, bevorzugt zumindest das zweite und das dritte Zentrierelement, mindestens einen Steg auf, der in radialer Richtung von dem Zentrierelement hervorsteht. Der Steg dient vorteilhaft zur axialen Positionierung des Deckels im auf einem Zubereitungsgefäß aufgebrachten Zustand.

Die Erfindung betrifft ferner ein Zubereitungsgefäß für ein Küchengerät, aufweisend mindestens einen Zubereitungsraum und mindestens einen Deckel nach einem der beschriebenen Ausführungsbeispiele. Der Zubereitungsraum ist mit dem Deckel abdeckbar. Vorteilhaft ist der Deckel mit dem Zubereitungsgefäß, insbesondere automatisiert, verriegelbar.

Ferner betrifft die Erfindung ein Küchengerät mit mindestens einer Küchengerätebasis und mindestens einem Zubereitungsgefäß nach einem der beschriebenen Ausführungsbeispiele und einem Deckel nach einem der beschriebenen Ausführungsbeispiele. Das Zubereitungsgefäß ist mit seinem Fußbereich in einem Aufnahmebereich einer Küchengerätebasis des Küchengerätes anordenbar. Insbesondere weist der Aufnahmebereich der Küchengerätebasis mindestens eine elektrische Schnittstelle auf, die mit einer elektrischen Gegenschnittstelle des Zubereitungsgefäßes kontaktiert ist, wenn das Zubereitungsgefäß im Aufnahmebereich angeordnet ist, und/oder mindestens eine mechanische Schnittstelle, die mit einer mechanischen Gegenschnittstelle des Zubereitungsgefäßes verbunden ist, um ein Drehmoment zu übertragen, wenn das Zubereitungsgefäß im Aufnahmebereich angeordnet ist.

Das Zubereitungsgefäß weist beispielsweise mindestens einen Werkzeughalter auf. Ferner ist vorzugsweise mindestens ein an dem Werkzeughalter befestigtes Werkzeug zum Rühren und/oder Zerkleinern von Lebensmitteln vorgesehen. Ein Zubereitungsraum des Zubereitungsgefäßes für die Aufnahme von Speisen ist vorzugsweise mit einem Metall ausgekleidet oder aus einem Metall ausgebildet. Bevorzugt ist das Metall ein rostfreier Stahl. Ferner ist insbesondere vorgesehen, dass das Zubereitungsgefäß mindestens eine, insbesondere elektrische, Heizeinrichtung aufweist, mit der vorzugsweise in das Zubereitungsgefäß einbringbare Lebensmittel aufheizbar sind. Das Zubereitungsgefäß weist für die Heizeinrichtung z. B. mindestens eine elektrische Schnittstelle zum Küchengerät auf.

Beispielsweise weist das Zubereitungsgefäß mindestens eine elektrische Gegenschnittstelle auf, um das Zubereitungsgefäß mit einer Arbeitsspannung zu versorgen, beispielsweise für eine Heizeinrichtung, oder um Sensoren im Zubereitungsgefäß zu kontaktieren. Die elektrische Schnittstelle wirkt im in dem Aufnahmebereich angeordneten Zustand mit einer elektrischen Gegenschnittstelle der Küchengerätebasis zusammen.

Ferner ist beispielsweise vorgesehen, dass das Zubereitungsgefäß mindestens eine mechanische Gegenschnittstelle aufweist, die zur Übertragung eines Drehmoments von einer Arbeitseinheit, z. B. einem Elektromotor, der Küchengerätebasis auf ein an dem Zubereitungsgefäß angeordnetes Werkzeug bzw. den Werkzeughalter dient.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Deckels in perspektivischer Ansicht auf die Deckeloberseite,
- Fig. 2: das Ausführungsbeispiel gemäß Fig. 1 in Draufsicht,
- Fig. 3: das Ausführungsbeispiel gemäß Fig. 1 in einer anderen perspektivischen Ansicht auf die Deckeloberseite,
- Fig. 4: eine Detailansicht der Deckeloberseite des Ausführungsbeispiels gemäß Fig. 1,
- Fig. 5a: einen Schnitt durch das Ausführungsbeispiel gemäß Fig. 1 entlang der Linie A1 in Fig. 2,
- Fig. 5b: einen Schnitt durch das Ausführungsbeispiel gemäß Fig. 1 entlang der Linie A2 in Fig. 2,
- Fig. 5c: einen Schnitt durch das Ausführungsbeispiel gemäß Fig. 1 entlang der Linie A3 in Fig. 2,
- Fig. 6a: eine perspektivische Ansicht einer Deckelunterseite des Ausführungsbeispiels gemäß Fig. 1,
- Fig. 6b: eine weitere perspektivische Ansicht einer Deckelunterseite des Ausführungsbeispiels gemäß Fig. 1,
- Fig. 7: eine Detailansicht der Deckelunterseite gemäß Fig. 6a und 6b,
- Fig. 8: eine perspektivische Ansicht eines weiteren Ausführungsbeispiels eines Deckels von der Deckeloberseite, und
- Fig. 9: ein Ausführungsbeispiel eines Küchengerätes mit einem Zubereitungsgefäß und einem Deckel gemäß Fig. 1.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

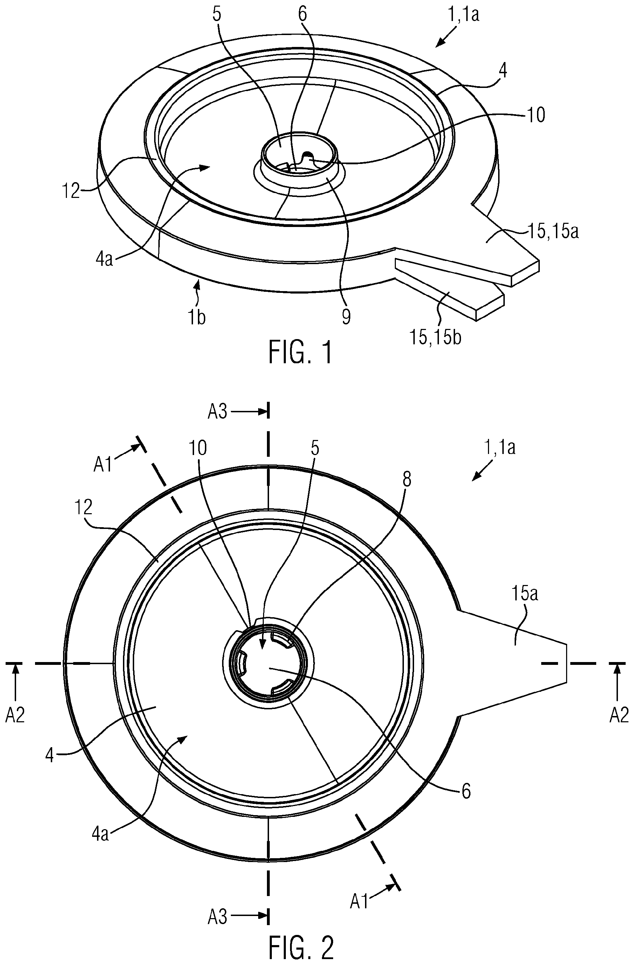

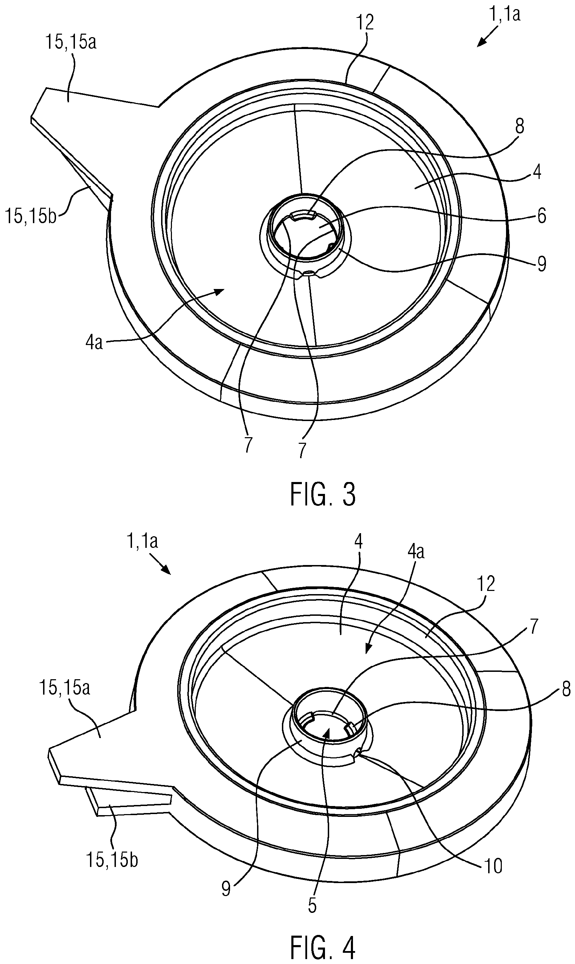

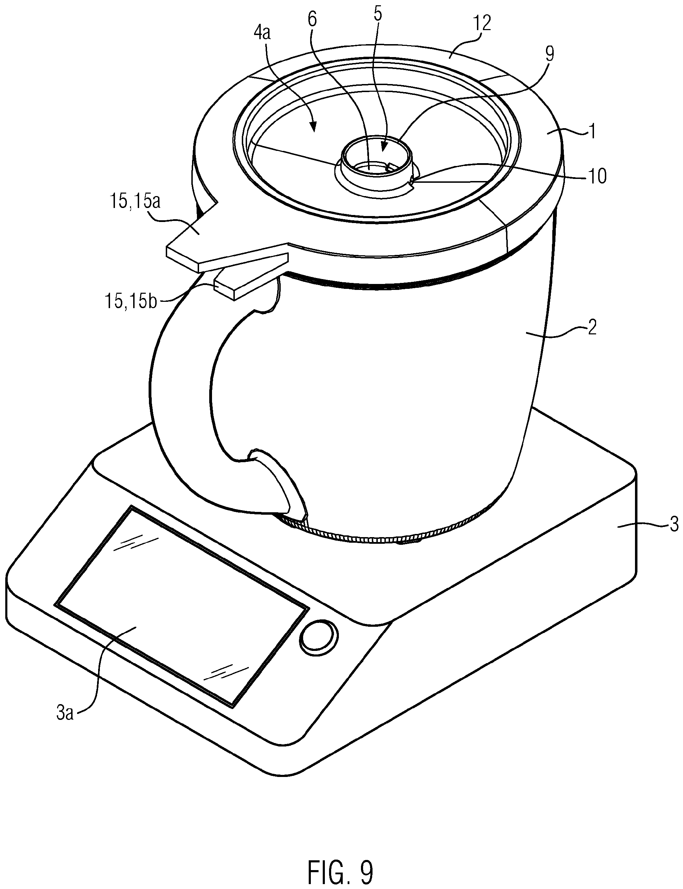

Fig. 1 zeigt ein Ausführungsbeispiel eines Deckels 1, beispielsweise für ein Zubereitungsgefäß 2 zum Aufbringen auf eine Küchengerätebasis 3 eines Küchengerätes, das beispielhaft in Fig. 9 dargestellt ist. Weitere Ansichten des erfindungsgemäßen Deckels 1 sind in den Fig. 2 bis 7 dargestellt.

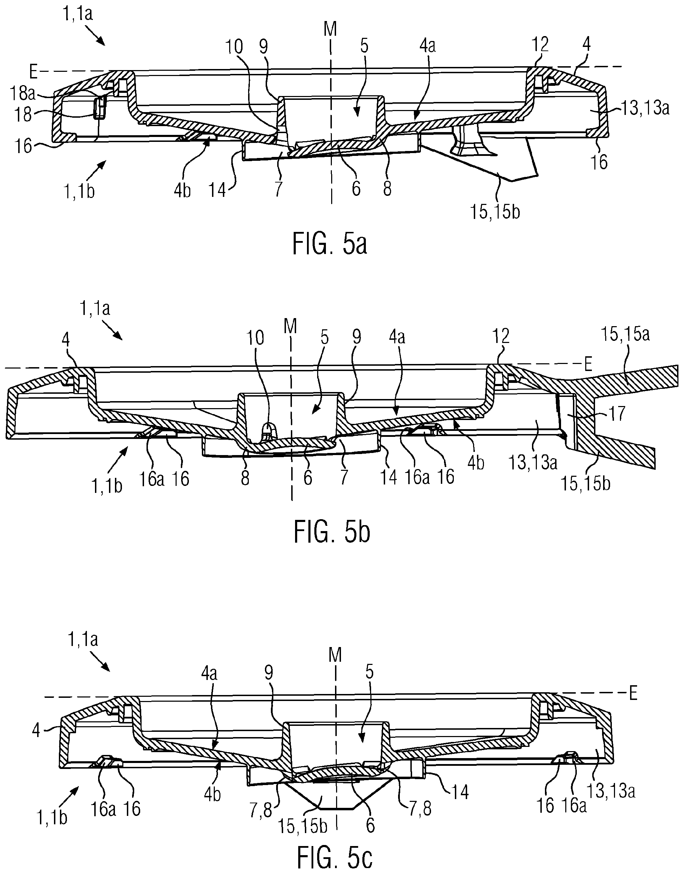

Der Deckel 1 gemäß dem Ausführungsbeispiel der Fig. 1 bis 7 weist einen Grundkörper 4 mit einer Deckeloberseite 1a und einer Deckelunterseite 1b auf. Der Deckel 1 weist mindestens eine Ausnehmung 5 auf, die den Grundkörper 4 zwischen Deckeloberseite 1a und Deckelunterseite 1b durchtritt. Die Ausnehmung 5 ist hier kreisrund und erstreckt sich um eine Mittelachse M der Ausnehmung 5 herum (siehe Fig. 5a bis Fig. 5c). Alternativ dazu ist z. B. eine ovale, rechteckige oder polygonale Ausnehmung vorgesehen. Die Ausnehmung 5 weist einen freien Querschnitt auf, der sich parallel zu der Mittelachse M erstreckt. Bei diesem Ausführungsbeispiel ist der freie Querschnitt, insbesondere gemäß Fig. 2, vollständig von einem Spritzschutz 6 überdeckt. Der Spritzschutz 6 weist einen Querschnitt bzw. eine Grundfläche auf, der bzw. die etwa dem freien Querschnitt der Ausnehmung 5 entspricht. Der Spritzschutz 6 ist einstückig mit dem Grundkörper ausgebildet.

Der Spritzschutz 6 ist an der Deckelunterseite 1b angeordnet und ist geringfügig zur Ausnehmung 5 beabstandet angeordnet. Durch den Abstand des Spritzschutzes 6 zum Grundkörper 4 sind drei in Umfangsrichtung orientierte Durchtrittsöffnungen 7 vorhanden, durch die Dampf aus dem Zubereitungsraum eines Zubereitungsgefäßes 2 entweichen kann. Die Durchtrittsöffnungen 7 können nur in radialer Richtung, insbesondere zur Mittelachse M, durchströmt werden. Die Durchtrittsöffnungen 7 sind in Umfangsrichtung orientiert, weisen also vorteilhaft ihren freien Querschnitt in Umfangsrichtung auf. Der Spritzschutz 6 ist bei diesem Ausführungsbeispiel durch drei Stege 8 einstückig mit dem Grundkörper 4 verbunden.

Fig. 5a bis Fig. 5c zeigen drei Schnitte durch den Deckel 1 gemäß den Linien A1 bis A3 in Fig. 2. Der Schnitt gemäß Fig. 5a entspricht der Linie A1-A1, der Schnitt gemäß Fig. 5b der Linie A2-A2 und der Schnitt gemäß 5c der Linie A3-A3. Wie aus Fig. 5a bis Fig. 5c ersichtlich, ist der Spritzschutz 6 in Richtung der Deckeloberseite 1a konvex gewölbt bzw. ist die in Richtung der Deckeloberseite 1a orientierte Oberfläche des Spritzschutzes 6 konvex gewölbt. Dadurch kann von oben auf den Spritzschutz 6 auftreffende Flüssigkeit über die konvexe Wölbung durch die Durchtrittsöffnungen 7 in Richtung des Zubereitungsraumes eines Zubereitungsgefäßes 2 ablaufen. Ferner ist der Spritzschutz 6 gemäß Fig. 5a bis Fig. 5c geneigt, insbesondere gegenüber der Mittelachse M, so dass ebenfalls aufgebrachte Flüssigkeit von der Deckeloberseite 1a oder der Deckelunterseite 1b in Richtung der Neigung ablaufen kann. Gemäß Fig. 5a bis Fig. 5c ist der Spritzschutz 6 in Richtung einer Stauwandöffnung 10 in einer Stauwand 9 geneigt.

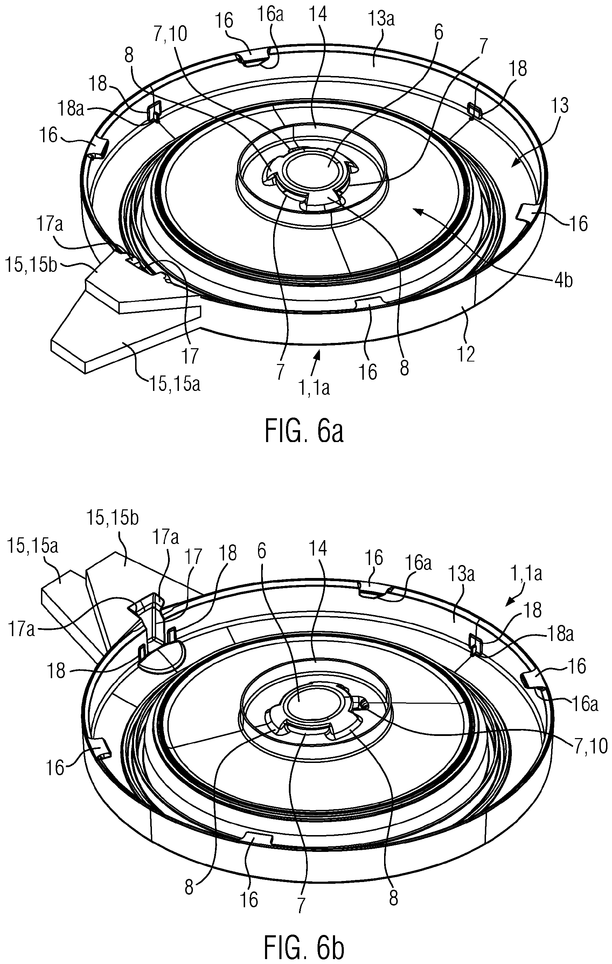

Gemäß Fig. 5a ist dadurch die linke Seite des Spritzschutzes 6 weiter unten angeordnet als dessen rechte Seite, so dass die Höhe der Durchtrittsöffnung 7 auf der linken Seite am größten ist. Der Spritzschutz 6 weist eine im Wesentlichen konstante Dicke auf, so dass die Unterseite des Spritzschutzes 6 bzw. eine in Richtung Zubereitungsraum orientierte Oberfläche teilweise konkav gewölbt ist. Die konkave Wölbung ist im Wesentlichen in einer Kreisfläche ausgehend von der Mitte ausgebildet, während umlaufend ein schmaler ungewölbter Rand ausgebildet ist (siehe beispielsweise Fig. 6a und 6b). Die Mittelachse M der Ausnehmung 5 (siehe beispielsweise Fig. 5a bis Fig. 5c) ist im Wesentlichen parallel zu einer Stauwand 9 angeordnet, die die Ausnehmung 5 auf der Deckeloberseite 1a vollständig und unmittelbar angrenzend umgibt.

Insbesondere gemäß Fig. 1 und Fig. 5a bis Fig. 5c ist ein die Ausnehmung 5 vollständig umgebender Teil der Oberfläche 4a der Deckeloberseite 1a in Richtung der Ausnehmung 5 abfallend geneigt. Dadurch fließt auf diese Oberfläche auftretende Flüssigkeit in Richtung der Stauwand 9. Die Stauwand 9 weist mindestens eine Stauwandöffnung 10 auf, die an der tiefsten Stelle der die Stauwand 9 umgebenden, geneigten Oberfläche 4a der Deckeloberseite 1a angeordnet ist. Die geneigte Oberfläche 4a weist in ihrer Erstreckung um die Ausnehmung 4 unterschiedliche Neigungen auf (siehe insbesondere Fig. 5a), die so ausgebildet und angeordnet sind, dass eine Flüssigkeit stets zur Stauwandöffnung 10 bzw. erst zur Stauwand 9 und dann zur Stauwandöffnung 10 fließt.

Eine Flüssigkeit kann anschließend durch die Stauwandöffnung 10 in Richtung eines Zubereitungsraumes des Zubereitungsgefäßes 2 tropfen. Damit der Volumenstrom der Flüssigkeit definiert ist, der durch die die Stauwandöffnung 10 über einen Zeitraum hindurchtreten kann, weist die Stauwandöffnung 10 einen Querschnitt von etwa 25 mm² auf. Dieser Querschnitt stellt einen Durchsatz von 6 bis 10 g/s insbesondere 8 g/s bei einem viskosen Lebensmittel sicher. Dieser Querschnitt ist vorteilhaft anhand der Viskosität von zähflüssigen Lebensmittel wie z. B. Pflanzenöle insbesondere Raps-, Sonnenblumen- oder Olivenöle oder geschmolzener Butter ermittelt worden.

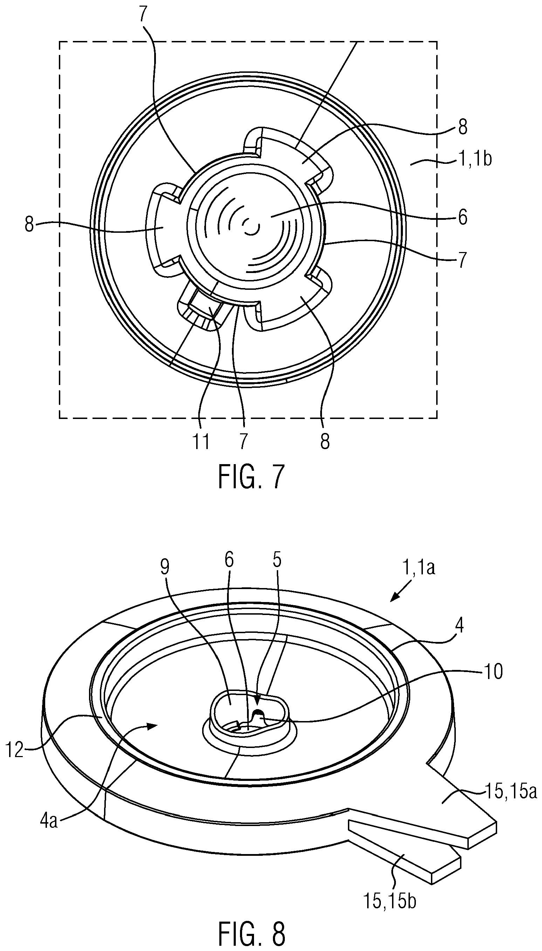

Damit die die Stauwandöffnung 10 durchtretende Flüssigkeit nicht auf den Spritzschutz 6 auftropft, weist die Ausnehmung 5, insbesondere gemäß Fig. 7, eine lokale Erweiterung 11 auf, die einen im Wesentlichen rechteckigen Querschnitt hat. Alternativ dazu ist vorgesehen, dass die Ausnehmung oval, kreisförmig, dreieckig oder polygonal ausgebildet ist. Die lokale Erweiterung 11 ist im Bereich einer Durchtrittsöffnung 7 angeordnet, hier genau mittig zwischen zwei Stegen 8. Dadurch kann die die Stauwandöffnung 10 durchtretende Flüssigkeit unmittelbar in den Zubereitungsraum eintropfen. Dadurch, dass der Spritzschutz 6 auch in diese Richtung geneigt ist, läuft auf dem Spritzschutz 6 ablaufende Flüssigkeit in Richtung der lokalen Erweiterung 11.

An der Deckeloberseite 1a des Deckels 1 ist ein Deckelrand 12 ausgebildet, dessen höchste Abschnitte sich in einer gedachten Ebene E erstrecken, zu der die Mittelachse M der Ausnehmung 5 eine Ebenennormale ist. Der Deckelrand 12 umgibt die geneigte Oberfläche auf der Deckeloberseite 1a vollständig. Anschließend an den höchsten Punkt der geneigten Oberfläche 4a erstreckt sich der Deckelrand 12 im Wesentlichen senkrecht nach oben, insbesondere in Richtung der Ebene E.

Um vorteilhaft eine Flüssigkeit auf die Deckeloberseite 1a, insbesondere auf die geneigte Oberfläche 4a, aufbringen zu können, begrenzen der Deckelrand 12 und die Stauwand 9 ein Volumen zur Aufnahme von Flüssigkeit im aufgebrachten Zustand des Deckels 1. Damit beim Aufbringen von zu viel Flüssigkeit über den Deckelrand 12 erfolgt, erstreckt sich der Deckelrand 12 höher als die Stauwand 9. Würde zu viel Flüssigkeit aufgebracht, könnte die Flüssigkeit die Stauwand 9 übertreten und in den Zubereitungsraum einlaufen, bevor sie über den Deckelrand 12 hinausläuft. Auf der Deckelunterseite 1b ist unterhalb des Deckelrandes 12 ein umlaufender Rücksprung 13 ausgebildet, mit dem ein oberer Rand eines Zubereitungsgefäßes 2 übergreifbar ist (siehe insbesondere Fig. 5a, 5b, 5c).

An der Deckelunterseite 1b ist die Ausnehmung 5 umlaufend von einer Trombenwand 14 umgeben. Die Trombenwand 14 erstreckt sich ebenfalls im Wesentlichen parallel zu einer Mittelachse M der Ausnehmung 5. Die Trombenwand 14 ist beabstandet zur Ausnehmung 5 angeordnet und verhindert vorteilhaft, dass Speisen von dem Zubereitungsraum durch die Durchtrittsöffnungen 7 spritzen bzw. hinaustreten können. Der Durchmesser der Trombenwand 14 ist etwa doppelt so groß wie der Durchmesser der Ausnehmung 5. Die die Ausnehmung 5 auf der Deckelunterseite 1b umgebende, geneigte Oberfläche 4b ist ausgehend von einer Unterseite des Deckelrandes 12, also von dem Rücksprung 13, in Richtung der Ausnehmung 5 ansteigend ausgebildet, wenn man den Deckel 1 von der Deckelunterseite 1b betrachtet. Dadurch läuft von der Deckelunterseite 1b anspritzende Flüssigkeit stets in Richtung der Trombenwand 14 und tropft an dieser nach unten ab, wenn der Deckel 1 auf ein Zubereitungsgefäß 2 aufgebracht ist. Der Grundkörper 4 weist zumindest im Bereich der geneigten Flächen 4a, 4b eine im Wesentlichen konstante Materialdicke auf.

Der Deckel 1 weist gemäß Fig. 1 bis Fig. 6b, 8 und 9 ein Griffstück 15 auf, mit dem der Deckel 15 von einem Benutzer gegriffen werden kann. Das Griffstück 15 umfasst einen ersten Griffstückabschnitt 15a und einen zweiten Griffstückabschnitt 15b, die in einem Winkel von etwa 30° zueinander angeordnet sind. Der erste Griffstückabschnitt 15a ist etwas länger als der zweite Griffstückabschnitt 15b ausgebildet. Ein Benutzer kann den Deckel 1 am Griffstück 15 mit Daumen und Zeigefinger greifen.

Gemäß Fig. 6a und Fig. 6b weist der Deckel 1 vier radial in Richtung der Mittelachse M ragende Nocken 16 auf, die der automatischen Verriegelung des Deckels 1 mit einem Zubereitungsgefäß 2 dienen. Die Nocken 16 sind zum Zusammenwirken mit einer rotierbaren Verriegelungskulisse am Zubereitungsgefäß 2 ausgebildet. Die Nocken 16 sind ausgehend von dem Griffstück 15 paarweise gegenüberliegend zueinander, in ungleichmäßigen Abständen zueinander und zum Griffstück 15, auf dem Umfang verteilt angeordnet. Die Nocken 16 sind an einer freien Kante eines inneren Randes 13a im Bereich des Rücksprungs 13 angeordnet. Um das Zusammenwirken bei der automatischen Verriegelung zu vereinfachen, weist jeder Nocken 16 eine Führungsschräge 16a auf, die in Richtung der Deckeloberseite 1a orientiert ist.

Die Nocken 16 haben beispielsweise eine Breite von etwa 10 mm bis 14 mm und/oder eine Tiefe - in radialer Richtung - zwischen 5 mm und 7 mm und/oder eine Höhe - in einer Richtung parallel zur Mittelachse M - zwischen 3,5 mm und 5,5 mm.

Eine Zentrierung des Deckels 1 relativ zum Zubereitungsgefäß 2 (beispielsweise gemäß Fig. 9) wird durch fünf Zentrierelemente 18 gewährleistet, die ebenfalls an einem inneren Rand 13a im Bereich des Rücksprungs 13 ausgebildet und radial in Richtung der Ausnehmung 5 hervorstehen. Die Zentrierelemente 5 sind beabstandet zur unteren Kante des inneren Randes 13a angeordnet. Ein erstes Zentrierelement 18 ist auf dem Umfang gegenüberliegend zum Griffstück 15 angeordnet. In einem gedachten Polkoordinatensystem, in dem die Mittelachse M dem Pol entspricht und das Griffstück 15 bei 0° liegt, sind ein zweites und ein drittes Zentrierelement 18 bei 90° und bei 270° angeordnet. Das erste Zentrierelement 18 wäre dann bei 180° angeordnet. Ein viertes und ein fünftes Zentrierelement 18 sind jeweils seitlich neben der Ausnehmung 17 angeordnet.

Das zweite und dritte Zentrierelement 18 weisen zudem jeweils einen Steg 18 auf, der von dem Zentrierelement 18 in radialer Richtung hervorsteht und insbesondere der axialen Positionierung des Deckels 1 auf einem Zubereitungsgefäß 2 dient.

Um ein Verdrehen des Deckels 1 auf dem Zubereitungsgefäß 2 beim automatischen Verriegeln zu verhindern, weist der Deckel 1 an seiner Deckelunterseite 1b, insbesondere im Bereich des Griffstücks 15, eine Verdrehsicherung 17 in Form einer sich im Wesentlichen parallel zur Mittelachse M der Ausnehmung 5 erstreckenden Ausnehmung auf. Eine - nicht dargestellte - radiale Erweiterung an dem Zubereitungsgefäß 2 dringt beim Aufbringen des Deckels 1 entlang ihrer Längserstreckung in die Verdrehsicherung 15 ein und verhindert dadurch eine Rotation des Deckels 1. Die Verdrehsicherung 17 in Form der Ausnehmung weist zwei gegenüberliegend zueinander angeordnete Einführschrägen 17a auf.

Bei dem Ausführungsbeispiel der Fig. 1 bis Fig. 7 und Fig. 9 weist die Stauwand 9 auf der Deckeloberseite 1a eine gleichbleibende Erstreckung über ihren gesamten Umfang auf, eine obere Stirnfläche der Stauwand 9 weist also stets einen gleichen Abstand zur Ebene E auf. Fig. 8 zeigt ein Ausführungsbeispiel einer Stauwand 9 mit einer wellenförmigen Kontur bzw. Stirnfläche. Die Höhe der Stauwand 9 variiert also über ihren Umfang. Dadurch kann vorteilhaft verhindert werden, dass die Stauwand 9 mit einem flachen Gegenstand abgedeckt und dadurch die Ausnehmung 5 blockiert wird, wodurch stets die Möglichkeit des Dampfaustritts aus dem Zubereitungsraum gewährleistet wird.

Fig. 9 zeigt ein Ausführungsbeispiel eines Küchengerätes mit einer Küchengerätebasis 3 und einem auf die Küchengerätebasis 3 aufgesetzten Zubereitungsgefäß 2. Das Zubereitungsgefäß 2 ist mit einem Deckel 1 verschlossen. Im dargestellten, aufgesetzten Zustand des Zubereitungsgefäßes 2 sind - nicht dargestellte - elektrische und mechanische Schnittstellen der Küchengerätebasis 3 mit entsprechenden Gegenschnittstellen in bekannter Weise miteinander in Wirkverbindung. Die Küchengerätebasis 3 weist eine kombinierte Anzeige- und Eingabevorrichtung 3a in Form eines Touchscreens auf. Zusätzlich kann eine weitere elektromechanische Eingabevorrichtung in Form eines Drehschalters vorhanden sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Deckel
- 1a: Deckeloberseite
- 1b: Deckelunterseite
- 2: Zubereitungsgefäß
- 3: Küchengerät
- 3a: Anzeige- und Eingabevorrichtung
- 4: Grundkörper
- 4a: geneigte Oberfläche von 1a
- 4b: geneigte Oberfläche von 1b
- 5: Ausnehmung
- 6: Spritzschutz
- 7: Durchtrittsöffnung
- 8: Steg
- 9: Stauwand
- 10: Stauwandöffnung
- 11: lokale Erweiterung
- 12: Deckelrand
- 13: Rücksprung
- 13a: Innerer Rand
- 14: Trombenwand
- 15: Griffstück
- 15a: Griffstückabschnitt
- 15b: Griffstückabschnitt
- 16: Nocken
- 16a: Schräge
- 17: Verdrehsicherung
- 17a: Einführschrägen
- 18: Zentrierelement
- 18a: Steg
- E: gedachte Ebene
- M: Mittelachse der Ausnehmung 5

## Patentansprüche

1. Deckel (1) für ein Zubereitungsgefäß (2) eines Küchengeräts (3), aufweisend einen Grundkörper (4) mit einer Deckeloberseite (1a), einer Deckelunterseite (1b) und mindestens einer Ausnehmung (5), wobei die Ausnehmung (5) den Grundkörper (4) zwischen Deckeloberseite (1a) und Deckelunterseite (1b) durchtritt,
**dadurch gekennzeichnet, dass**
ein freier Querschnitt der Ausnehmung (5) zumindest teilweise von einem Spritzschutz (6) überdeckt ist, und dass der Spritzschutz (6) einstückig mit dem Grundkörper (4) ausgebildet ist.

2. Deckel (1) nach Anspruch 1,
**dadurch gekennzeichnet, dass**
der freie Querschnitt der Ausnehmung (5) vollständig von dem Spritzschutz (6) überdeckt ist, und dass zwischen Spritzschutz (6) und Grundkörper (4) mindestens eine in Umfangsrichtung orientierte Durchtrittsöffnung (7) vorhanden ist.

3. Deckel (1) nach Anspruch 1 oder 2,
**dadurch gekennzeichnet, dass**
der Spritzschutz (6) mit mindestens oder genau einem Steg (8) oder mindestens oder genau zwei oder mindestens oder genau drei Stegen (8) mit dem Grundkörper (4) verbunden ist, insbesondere dass an den oder die Stege (8) angrenzend die Durchtrittsöffnung (7) ausgebildet ist/sind.

4. Deckel (1) nach einem der Ansprüche 1 bis 3,
**dadurch gekennzeichnet, dass**
der Spritzschutz (6) in Richtung der Deckeloberseite (1a) konvex gewölbt ist.

5. Deckel (1) nach einem der Ansprüche 3 oder 4,
**dadurch gekennzeichnet, dass**
der Spritzschutz (6) geneigt ist, so dass von der Deckeloberseite (1a) und/oder der Deckelunterseite (1b) aufgebrachte oder anspritzende Flüssigkeiten zumindest teilweise in Richtung der Neigung ablaufen.

6. Deckel (1) nach einem der Ansprüche 1 bis 5,
**dadurch gekennzeichnet, dass**
die Ausnehmung (5) auf der Deckeloberseite (1a) zumindest teilweise von mindestens einer Stauwand (9) umgeben ist, dass zumindest ein Teil der Oberfläche der Deckeloberseite (1a) zumindest abfallend in Richtung der Stauwand (9) geneigt ist, dass die Stauwand (9) mindestens eine Stauwandöffnung (10) aufweist, und dass ein tiefster Bereich der geneigten Oberfläche (4a) der Deckeloberseite (1a) zumindest angrenzend an die Stauwandöffnung (10) ausgebildet ist.

7. Deckel (1) nach Anspruch 6,
**dadurch gekennzeichnet, dass**
die Stauwand (9) unmittelbar an die Ausnehmung (5) angrenzend ausgebildet ist.

8. Deckel (1) nach einem der Ansprüche 1 bis 7,
**dadurch gekennzeichnet, dass**
unterhalb der Stauwandöffnung (10) eine lokale Erweiterung (11) der Ausnehmung (5) und/oder mindestens eine Durchtrittsöffnung (7) ausgebildet ist.

9. Deckel (1) nach einem der Ansprüche 1 bis 8,
**dadurch gekennzeichnet, dass**
ein Deckelrand (12) an der Deckeloberseite (1a) ausgebildet ist, insbesondere dass der Deckelrand (12) die geneigte Oberfläche (4a) umfänglich umgibt, insbesondere dass sich der Deckelrand (12) höher erstreckt als ein höchster Bereich der geneigten Oberfläche (4a).

10. Deckel (1) nach Anspruch 9,
**dadurch gekennzeichnet, dass**
sich der Deckelrand (12) höher als die Stauwand (9) erstreckt, insbesondere um mindestens 10% höher als die Stauwand (9).

11. Deckel (1) nach einem der Ansprüche 1 bis 10,
**dadurch gekennzeichnet, dass**
die Ausnehmung (5) auf der Deckelunterseite (1b) zumindest teilweise, insbesondere vollständig, von mindestens einer Trombenwand (14) umgeben ist, insbesondere dass die Trombenwand (14) einen Abstand zur Ausnehmung (5) aufweist.

12. Deckel (1) nach einem der Ansprüche 1 bis 11,
**dadurch gekennzeichnet, dass**
eine die Ausnehmung (5) umgebende Oberfläche (4b) der Deckelunterseite (1b) ausgehend von einer Unterseite eines Deckelrandes (12) in Richtung der Ausnehmung (5) ansteigt.

13. Deckel (1) nach einem der Ansprüche 1 bis 12,
**dadurch gekennzeichnet, dass**
der Deckel (1) an der Deckelunterseite (1b) mindestens eine Verdrehsicherung (17) in Form einer Ausnehmung aufweist, und dass die Verdrehsicherung (17) derart ausgebildet ist, dass eine zumindest teilweise radial nach außen von einem Zubereitungsgefäß (2) hervorstehende Erweiterung beim Aufbringen in die Verdrehsicherung (17) eintreten kann und/oder dass der Deckel (1) an der Deckelunterseite (1b) eine Mehrzahl an Zentrierelementen (18) aufweist, insbesondere dass die Zentrierelemente (18) radial in Richtung der Ausnehmung (5) hervorstehen, vorzugsweise dass mindestens ein Zentrierelement (18) mindestens einen Steg aufweist.

14. Zubereitungsgefäß (2) für ein Küchengerät (3) mit einem Deckel (1) nach einem der Ansprüche 1 bis 13, wobei das Zubereitungsgefäß (2) mindestens einen Zubereitungsraum aufweist, wobei der Zubereitungsraum mit dem Deckel (1) abdeckbar ist.

15. Küchengerät mit mindestens einer Küchengerätebasis (3) und mindestens einem Zubereitungsgefäß (2) nach Anspruch 14, wobei das Zubereitungsgefäß (2) in einem Aufnahmebereich der Küchengerätebasis (3) anordenbar ist.
